# EUROPEAN PATENT SPECIFICATION

(11) **EP 3 949 085 B1**
(45) Date of publication and mention of the grant of the patent: **30.04.2025**
(21) Application number: 20778676.5
(22) Date of filing: 17.03.2020
(51) Int. Cl.: H02K 3/52, H02K 1/18, H02K 5/15

(54) **INSULATING ELEMENT FOR WINDING OVERHANGS OF A STATOR OF A ROTATING ELECTRICAL MACHINE, AND CORRESPONDING STATOR AND ROTATING ELECTRICAL MACHINE**
ISOLIERELEMENT FÜR WICKELKÖPFE EINES STATORS EINER ROTIERENDEN ELEKTRISCHEN MASCHINE SOWIE ENTSPRECHENDER STATOR UND ROTIERENDE ELEKTRISCHE MASCHINE
ÉLÉMENT D'ISOLATION POUR TÊTES DE BOBINES D'UN STATOR D'UNE MACHINE ÉLECTRIQUE TOURNANTE, ET STATOR ET MACHINE ÉLECTRIQUE TOURNANTE CORRESPONDANTS

(30) Priority: 25.03.2019 FR 1903061
(43) Date of publication of application: 09.02.2022
(73) Proprietor: Valeo Japan Co., Ltd., Kumagaya-Shi SAITAMA 360-0193 (JP)
(72) Inventor: BELLET, Augustin, 78320 Le Mesnil Saint Denis (FR); CHRAPKIEWICZ, Miroslaw, 78320 Le Mesnil Saint Denis (FR); KHANCHOUL, Mohamed, 78320 Le Mesnil Saint Denis (FR); MYNARSKI, Jakub, 78320 Le Mesnil Saint Denis (FR)
(74) Representative: Valeo Systèmes Thermiques
(86) International application number: PCT/JP2020/011592
(87) International publication number: WO 2020/196071

(56) References cited:
- EP-A1- 3 373 427
- EP-A2- 2 804 294
- WO-A1-2010/103871
- DE-U1- 202009 011 270
- FR-A1- 2 995 739
- FR-A1- 3 004 867
- JP-A- 2015 133 808
- JP-A- 2018 057 074
- US-A1- 2012 075 049
- US-A1- 2013 259 674

## Description

### Technical Field

The field of the present invention is that of the stators of rotating electrical machines, and more particularly of the insulating elements for winding overhangs of the stator of a rotating electrical machine. The invention can notably be advantageously used for a compressor, for example of refrigerant of an air conditioning system for a motor vehicle.

### Background Art

In the state of the art, FR3004867A1, a vehicle air conditioning system comprises a closed circuit in which a refrigerant circulates, the circuit comprises notably a condenser, an expansion valve, an evaporator and a compressor, notably an electrical compressor. A known electrical compressor comprises a rotating electrical machine, electrically powered and housed in a metal or synthetic housing, the rotating electrical machine comprising a stator fixed to the housing and a rotor that is mobile in rotation about a rotation axis. The rotor, situated radially inside the stator, is coupled in rotation to a shaft which is itself coupled in rotation to a compression device, thus allowing the compression of the refrigerant when the rotor is rotated. The housing is configured to ensure that the stator is secured in such a way that the latter remains immobile relative to the rotor, therefore dictating a specific dimensioning of the housing. The presence of securing members, such as tie-rods, ensuring the tight closure of the housing by securing different elements forming said housing, means, as is known, having to adapt the form of the stator and of any member required to cooperate therewith.

The stator is formed by a stack of sheets whose teeth accommodate a polyphase winding. The conductor wires of this winding, for example copper wires, are assembled around the teeth, thus forming windings and whose top and bottom ends form lead-out wires, also called winding overhangs. The windings are electrically linked to one another, for example so as to form three phases. This connection can be made according to different configurations, for example a delta or star configuration. In order to organize the winding of these conductor wires, it is known practice to equip the stator with an insulating element, disposed at the level of the winding overhangs.

Such insulating elements are nevertheless not always suited to the current stators, particularly when the latter combine windings connected according to a delta configuration, that is more complex, and the presence of securing members in the housing. Indeed, in the case of a delta configuration, several windings are electrically mounted in series, a terminal end of one winding being connected to the initial end of another winding. Such electrical connection requires the passage of numerous conductor wires within the stator, particularly in its top part where the connections between distinct windings are disposed. It is thus necessary on the one hand to organize the different conductor wires within the stator in order to circumvent the housing securing members, and on the other hand to electrically insulate said conductor wires from the securing members likely to conduct the electrical current running through the windings without in any way affecting the diameter of the stator concerned.

### Summary of invention

The problem is solved by the features of the independent claim 1. Advantageous embodiments emerge from the dependent claims, the description and the figures.

The present invention falls within this context and its aim is to propose an insulating element for winding overhangs of a stator that is capable of at least partly addressing the abovementioned drawbacks. Notably, the insulating element of the present invention is configured to organize the different wires of windings of a stator, whose windings are connected according to a delta configuration, while electrically insulating said conductor wires from other conductive elements external to the stator, such as the securing members, and do so while preserving the diameter of the stator. The invention can notably be advantageously used for a compressor, for example of refrigerant of an air conditioning system for a motor vehicle.

The subject of the present invention relates to an insulating element for winding overhangs of a stator comprising a support centred on an extension axis and defined by an outer radial face, an inner radial face and a top face which extends in a plane substantially orthogonal to the axis. The insulating element comprises a plurality of arms emerging from the inner radial face and distributed circumferentially thereon, as well as a plurality of indentations distributed circumferentially in the outer radial face and extending along the extension axis of the support. At least one indentation is at least partially delimited by a low wall emerging from the top face of the support in a direction substantially parallel to the extension axis. The insulating element being characterized in that it comprises at least one receptacle delimited by the low wall and by the top face, the receptacle being configured to receive at least one wire of a winding of the stator.

The insulating element consists of a support made of an insulating material, for example a synthetic material, having an annular form centred on the extension axis. The terms "internal/inner" or "external/outer" relative to this extension axis will be used hereinafter in the description and in the claims in a nonlimiting manner and in order to facilitate the understanding thereof. Also, according to a radial orientation, orthogonal to the extension axis, "the interior" designates a proximal part of the extension axis and "the exterior" designates a distal part of this same axis. The support thus comprises an inner radial face and an outer radial face, that are respectively defined by a first diameter and a second diameter, and joined to one another by a top face and a bottom face, both extending in planes substantially orthogonal to the extension axis. In particular, the insulating element is configured in such a way that the second diameter, defining the diameter of the outer radial face of the support, is greater than the first diameter. The dimension measuring the difference between the second diameter and the first diameter thus defines the thickness of the support.

The insulating element comprises a plurality of arms regularly distributed over the circumference of the inner radial face. Arm is understood to mean a member having a substantially elongate form emerging from the inner radial face towards the extension axis, for example in a direction substantially parallel to the plane of the top face and/or of the bottom face of the support. The arms are configured to cooperate with the winding overhangs of the stator and can have a portion that is flared at a free end. Additionally and according to a feature of the present invention, at least one arm can comprise at least one helical groove configured to receive at least one winding conductor wire. The groove or grooves are at least partially disposed in a top face of the arm in order to contribute to the organizing and the securing of at least one conductor wire at the time of the winding operation.

The insulating element also comprises a plurality of indentations, which are distributed regularly in the circumference of the outer radial face of the support. The indentations extend in a direction substantially parallel to that of the extension axis of the insulating element and at least over a height equal to the height of the support. "Height of the support" is understood to mean the dimension measured in a direction parallel to the extension axis, between the top face and the bottom face of the support.

The indentations are configured to allow a passage for securing members, such as tie-rods, which run in or along the housing enclosing a rotating electrical machine comprising the stator. The housing can comprise a block which houses the stator and which is closed by an electronic control unit of the motor. In such a case, the securing members retain the electronic unit on the block of the housing, by closing its longitudinal end.

The indentations each comprise a bottom, that is to say a zone radially closer to the extension axis of the insulating element and lateral edges extending in a direction substantially parallel to the extension axis. The indentations can have a semi-circular or arc profile, but other alternative forms will also be able to be envisaged.

The low walls consist of protuberances of material emerging from the top face of the support and comprising an outer periphery and an inner periphery. At least one low wall delimits, partially or completely, an indentation in its top part, or, to put it another way, the indentation extends over the height of the support and the height of the low wall, the low wall thus following the form of the indentation on its outer periphery. Notably, the outer periphery of the low wall can be disposed in the continuity of the outer radial face of the support. The inner periphery of the low wall emerges from the top face of the support, such that the low wall does not extend over all of the thickness of the support. Thus, the top face of the support forms, with the low wall, and more particularly with the internal periphery of the low wall, a receptacle configured to receive at least one wire of a winding of the stator connecting one winding to another. The inner periphery of the low wall can have variable forms, for example a semi-circular or arc form, or even comprise a substantially rectilinear section.

According to an additional feature of the present invention, at least one radial direction, originating in the extension axis, passes through an arm, a receptacle, a low wall and an indentation. To put it another way, an arm, a receptacle, a low wall and an indentation are at least partially radically aligned, the low wall, according to the invention, being radially interposed between the receptacle and the indentation. The low wall thus allows the passage of a conductor wire while electrically insulating it from any securing member extending at the level of the indentation delimited by the low wall.

Notably, the arm, the receptacle, the low wall and the indentation can be centred on the common radial axis passing through them, the radial axis passing through the middle of each of the respective widths of these elements. These widths are evaluated by considering them in the plane of the top face, orthogonal to the extension axis. The widths measure the distance separating two points lying within the ends of each of the abovementioned elements along an axis at right angles to the radial axis. Additionally, at least one arm can be configured so as to have a width, called width of the arm, that is less than or substantially equal to a width of the indentation aligned on the same radial axis.

According to an additional feature of the present invention, at least one low wall has a variable thickness, defined by a minimum thickness and a maximum thickness, the low wall having the minimum thickness in a central zone situated between the arm and the indentation, and the low wall having the maximum thickness at at least one lateral end of the low wall. The different thicknesses of the low wall are measured in the plane of the top face. The minimum thickness is thus the dimension measured along the radial axis, between the inner periphery and the outer periphery of the low wall. The maximum thickness is measured at a lateral end of the low wall, between the inner periphery and the outer periphery of the low wall, along an axis substantially at right angles to the inner periphery. The low wall can, for example, have a minimum thickness substantially equal to or greater than 0.5 mm ± 10%, a value corresponding to the minimum of the thickness required to allow the electrical insulation of the conductor wire or wires disposed in the receptacle delimited by the low wall. The maximum thickness can, for its part, lie within a range of values ranging from 2 to 8 times the value of the minimum thickness, such a maximum thickness ensuring the resistance of the low wall to the pulling forces undergone during winding. To the same end, the indentation can be bracketed, at at least one of its lateral edges, by a shoulder extending over the height of the support and in a direction substantially parallel to that of the extension axis, said shoulder extending, for example, in the continuity of the lateral end of the low wall having the maximum thickness.

Since the support according to the present invention comprises a plurality of indentations, the latter can be configured to all adopt an identical configuration, or, on the other hand, to each have a specific combination of the features previously explained. For example, and in a nonlimiting manner, one and the same insulating element can comprise indentations having one or more combinations of the features previously explained.

According to an additional feature of the invention, a portion of the support separating two adjacent indentations can be defined by an angular segment, this portion of support comprising at least one arm. To put it another way, the indentations as previously explained are disposed so as to be radially aligned with an arm. The insulating element can nevertheless comprise a greater number of arms than indentations. In such a configuration, all the arms are not radially disposed in the alignment of an indentation, and the indentations are particularly disposed in order not to be aligned with two adjacent arms. Thus, the indentations are at least separated by a portion of the support comprising an arm that is not formed in the radial alignment of an indentation.

Moreover, the different indentations can be formed regularly within the insulating element. For example, the different indentations can be respectively separated from the bracketing adjacent indentations by a first portion of the support, defined by a first angular segment, and by a second portion of the support, defined by a second angular segment, the first angular segment comprising a number of arms different from that of the second angular segment.

Additionally, the insulating element can comprise members, such as hooks, whose purpose is to organize the winding of the different conductor wires within the stator. According to a feature of the invention, the insulating element thus comprises a plurality of hooks emerging from the top face of the support, at least one of these hooks delimiting the receptacle. In other words, at least two hooks are disposed on at least one portion of the support separating two adjacent indentations, one of these hooks being particularly arranged at a lateral end of a low wall so as to delimit, at least partially, the receptacle intended to receive at least one conductor wire.

For example, a hook can be disposed either so as to be radially aligned with an arm, or so as to be disposed in a section of the support separating two adjacent arms. These hooks can take variable forms, but consist, generally, of the association of a base and of a finger, the base emerging from the top face of the support and extending in a direction substantially parallel to the extension axis, and the finger being disposed at the free end of the base and extending in a direction substantially at right angles to that of said base.

The hooks are defined by a width, measured according to a protocol similar to that described for measuring the width of the indentation or the width of the arm, and by a height. The height measures, along an axis parallel to that of the extension axis, the space separating the top face of the support, from a bottom face of the finger of the hook. This space is configured so as to allow the passage of at least one conductor wire. Preferentially, the height of the hooks allows the arrangement of at least two or three conductor wires arranged one alongside the others in the extension axis. To put it another way, the height of the hooks is substantially proportional to the diameter of a conductor wire used to produce the winding of the stator, said height being, preferably, at least equal to two or three times the value of the diameter of said conductor wire.

According to an additional feature of the invention, the support can also comprise, at the level of the top face, a flange delimiting, with the hooks, a recess for the passage of at least one conductor wire. The hooks and the flange thus ensure the securing of the conductor wire or wires and prevent any translational movement in a direction parallel to the extension axis. The flange extends in the continuity of the top face, in a direction substantially orthogonal to the extension axis, it is present at the level of the portions of support separating two adjacent indentations, and can be continuous or discontinuous. For example, it can be interrupted at a hook, in such a way that the recess is then limited only by the hook. The recess can thus be bordered by a hook and/or the flange depending on the point considered.

The present invention also proposes a stator of a rotating electrical machine comprising a body of the stator of cylindrical form, a plurality of windings formed by at least one conductor wire and an insulating element as previously explained. The body of the stator comprises a top terminal face against which the insulating element is disposed. Notably, the bottom face of the insulating element, cooperating with the top terminal face of the stator, can comprise centring means, intended to ensure the appropriate positioning of the insulating element on the stator.

The body of the stator is defined by an outer radial wall and an inner radial wall, the outer radial wall of the body of the stator comprising a plurality of notches extending at least over a height of the body, measured between the two terminal faces of the stator along an axis parallel to the extension axis. The notches of the body of the stator can be disposed so as to be aligned, in directions parallel to the extension axis, with at least three of the indentations of the insulating element when the latter is arranged on the body of the stator.

The outer radial wall of the body of the stator is defined by a diameter, called outer diameter of the body, this diameter being greater than the second diameter of the insulating element and being particularly defined so as to comprise all of said insulating element, such that, when the insulating element comprises one or more shoulders, the latter remain included in a volume delimited by the second diameter. Such a configuration guarantees that the stator does not comprise elements likely to increase its diameter.

According to an additional feature of the invention, the windings of the stator are electrically connected according to a delta configuration. The delta configuration consists of a three-phase electrical connection system, each of the three phases comprising a plurality of windings mounted in series and that can be configured to comprise an equal number of windings or not.

According to an additional feature of the invention, at least the conductor wire is arranged relative to the insulating element according to at least two radial positions which are each determined by a radial distance relative to the extension axis of the insulating element, a first portion of the conductor wire being arranged according to a first radial position which is defined by a first radial distance and a second portion of the same conductor wire being arranged according to a second radial position which is defined by a second radial distance, the first radial distance being less than the second radial distance and the first radial distance extending along a straight line passing through the low wall. Also, the second radial distance is measured between the second radial position and the extension axis of the insulating element, along a second straight line passing alongside the same low wall. The first radial distance is thus the dimension separating the first radial position from the extension axis of the insulating element measured along the straight line passing through the low wall. For example, the first radial distance can be the dimension measured between the extension axis and a point of the receptacle delimited by the internal periphery of the low wall.

According to an additional feature of the invention, at least the conductor wire is arranged in the insulating element in such a way that the first portion of the conductor wire is radially interposed between the low wall and the extension axis of the insulating element. The conductor wire can thus be arranged relative to the insulating element so as to exhibit an alternation between the first radial position and the second radial position. Notably, the first portion of the conductor wire is turned towards the interior of the stator when it is arranged according to the first radial position whereas the second portion of this same conductor wire, arranged according to the second radial position, is turned towards the outside of the stator. Such an arrangement thus contributes to the organization of the conductor wire relative to the insulating element, and therefore relative to the stator.

The present invention relates finally to a rotating electrical machine of a motor vehicle, the rotating electrical machine comprising the housing housing the stator comprising an insulating element as previously explained, the housing comprising a block and an electronic unit configured to close said block, the stator being situated radially around a rotor that is mobile in rotation about an axis of rotation, said axis coinciding with the extension axis of the insulating element. At least one notch of the stator and one indentation of the insulating element of the stator allow at least the passage of a securing member ensuring that the electronic unit is secured on the block. Notably, the rotating electrical machine according to the present invention can be intended for a motor vehicle compressor. Particularly, the structure of the insulating element and the arrangement of the conductor wire or wires relative to the insulating element and to the stator ensure that, once the rotating electrical machine is assembled, the conductor wire or wires circumvent the housing securing members and are electrically insulated from the housing securing members.

It is understood that all features and configurations previously described are in no way limiting. Other features, details and advantages of the invention will emerge more clearly on reading the detailed description given hereinbelow, and from several exemplary embodiments given in an indicative and nonlimiting manner with reference to the attached schematic drawings, in which:

### Brief Description of Drawings

[fig.1]is a perspective representation of a stator comprising an insulating element in the presence of the different conductor wires constituting the winding of the stator and an electrical connector;
[fig.2]is a perspective representation of the stator of Figure 1, in the absence of the conductor wires and of the electrical connector;
[fig.3]is a top view of the stator illustrating the arrangement of the different windings;
[fig.4]is a schematic representation of the delta connection of the electrical windings of the stator;
[fig.5]is a perspective view of the insulating element;
[fig.6]is a top view of a portion of the insulating element illustrating the respective arrangement of the different members that it comprises;
[fig.7]is a perspective view of the insulating element illustrating the respective arrangement of the different members that it comprises.

### DETAILED DESCRIPTION

It should first of all be noted that while the figures explain the invention in detail for its implementation, they can of course serve to best define the invention as necessary. It should also be noted that, in all the figures, the elements that are similar and/or fulfil the same function are indicated by the same reference frame.

Moreover, referring to the orientations and directions defined previously, the vertical direction will be represented by the axis Oy whereas the axes Ox and Oz will represent the directions of different radial axes. These axes together define an orthonormal reference frame Oxyz represented in the figures that require it. In this reference frame, the qualifiers "up" or "top" will be represented by the positive direction of the axis Oy, the qualifiers "down" or "bottom" being represented by the negative direction of this same axis Oz.

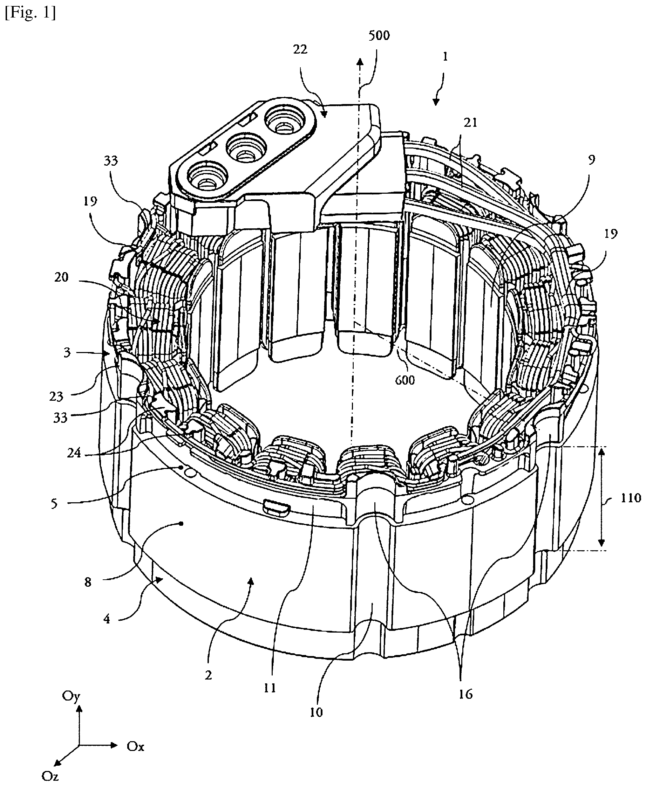

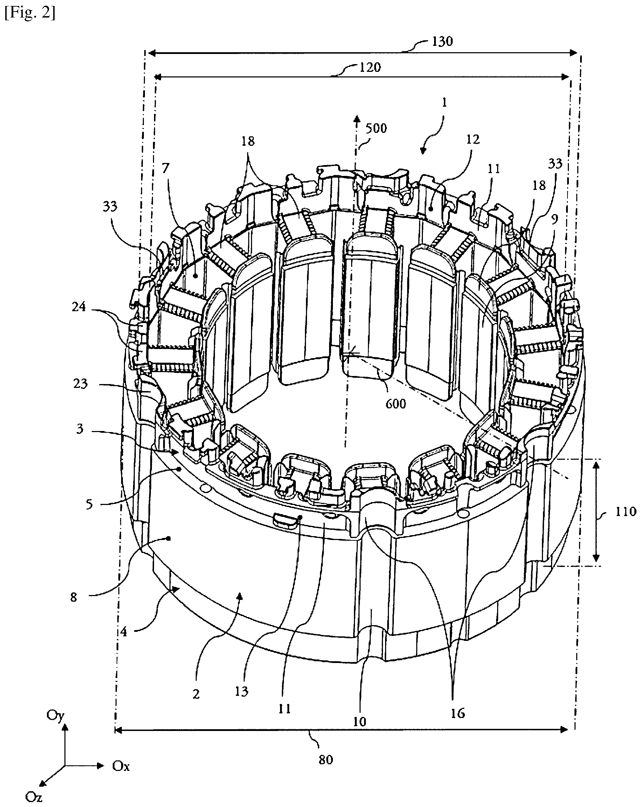

Figures 1 and 2 illustrate a stator 1 of a rotating electrical machine, such as a motor vehicle air conditioner refrigerant compressor, comprising a body 2, an insulating element 3 and an insulating member 4. The body 2 has a cylindrical form centred on an axis, called extension axis 500, defining the vertical direction Oy within the object. The insulating element 3 consists of a piece made of insulating material, such as a synthetic material, of annular form, disposed on a top terminal face 5 of the body 2 of the stator 1. This insulating element 3 comprises members intended to organize the different conductor wires 19 such as low walls 23, delimiting receptacles 33 or hooks 24. The insulating element 3 will be detailed more hereinbelow. The insulating member 4 has, similarly, an annular form, but it is nevertheless disposed at the level of a bottom terminal face of the body 2 of the stator 1. Both the insulating element 3 and the insulating member 4 are arranged so as to be centred on the extension axis 500.

The body 2 consists of a stack of laminated sheets, the body 2 comprising an inner radial wall 7 and an outer radial wall 8 respectively defining an inner diameter and an outer diameter 80 of the body 2. A plurality of teeth 9 emerge from the inner radial wall, and are regularly distributed over the circumference of the inner radial wall 7. The teeth 9 extend vertically, in a direction parallel to that of the extension axis 500, and radially, in a direction substantially at right angles to that of the extension axis 500 and towards said extension axis 500. In the example illustrated, the body 2 of the stator 1 comprises fifteen teeth 9.

The outer radial wall 8 of the body 2 comprises notches 10, the latter having a semi-circular profile and extending in a direction substantially parallel to that of the extension axis 500. The notches 10 extend over a height equal to a height of the body 110, that is to say the distance separating the bottom terminal face from the top terminal face 5 of the body 2. The notches 10 are configured to allow the passage of at least one securing member, not represented, such as a metal tie-rod, ensuring the securing of a housing of the rotating electrical machine.

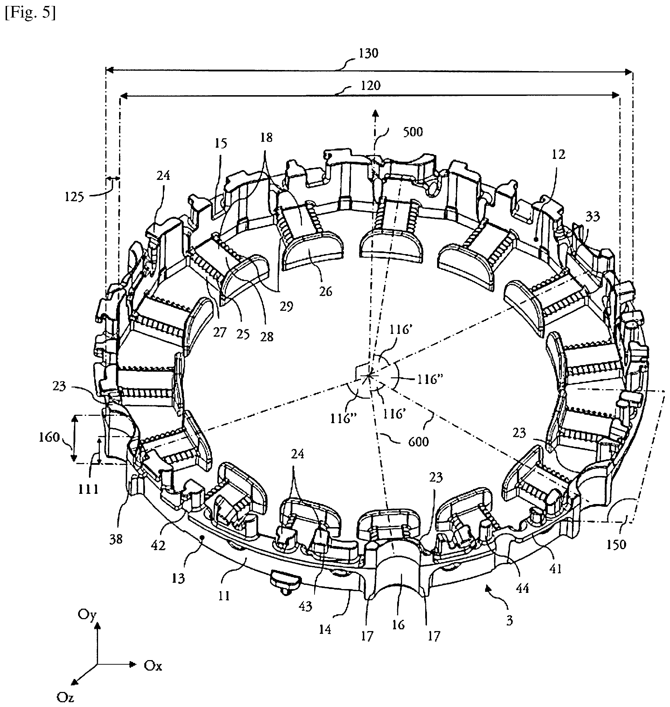

The insulating element 3 can be observed in more detail in Figures 2 and 5. The insulating element comprises a support 11 in the form of a ring defined by an inner radial face 12 and an outer radial face 13, respectively defining a first diameter 120 and a second diameter 130 and extending in directions substantially parallel to that of the extension axis 500. The dimension measuring the space separating the second diameter 130 from the first diameter 120 defines a thickness of the support 125. The support 11 also comprises a bottom face 14 and a top face 15 joining the inner radial face 12 and the outer radial face 13 and extending in a plane substantially orthogonal to that of the extension axis 500, for example called plane of the top face 150.

The insulating element 3 comprises, on the outer radial face 13, a plurality of indentations 16, distributed regularly in the outer radial face 13 and extending in a direction substantially parallel to that of the extension axis 500. Notably, the indentations 16 have a semi-circular profile, similar to that observed in the notches 10 of the body 2, and are laterally delimited by lateral edges 17. The indentations 16 are disposed in the support 11 of the insulating element 3 so as to be vertically aligned with said notches 10 and extend at least over a height equal to a height of the support 11, that is to say extending over the distance separating the bottom face 14 of the support 11 from its top face 15, measured in a direction parallel to that of the extension axis 500.

Arms 18 emerge from the inner radial wall 12, these arms 18 being distributed regularly in the inner circumference of the support 11 and being specifically arranged so as to adopt a distribution similar to that of the teeth 9 within the body 2 of the stator 1. The insulating element 3 thus comprises, in the example illustrated, fifteen arms 18, configured to be vertically aligned with the teeth 9 of the body 2 when the insulating element 3 is disposed on the top terminal face 5 of said body 2. The insulating member 4 adopts a similar configuration and is disposed at the bottom terminal face of the body 2. The vertical alignment of the arms of the insulating member 4, of the teeth 9 of the body 2 and of the arms 18 of the insulating element 3 allows the conductor wires 19 forming the winding to be wound.

In the invention represented, the insulating element 3 comprises a greater number of arms 18 than of indentations 16. The indentations 16 are particularly arranged so as to be radially aligned with an arm 18. In other words, some arms 18 are arranged in the support 11 in order for the arm 18 and the indentation 16 to be passed through by at least one common radial axis 600, this radial axis 600 originating in the extension axis 500 and extending in a direction at right angles thereto. This specific arrangement will be detailed more hereinbelow.

When the insulating element 3 is disposed on the body 2 of the stator 1, the second diameter 130 of the support 11 of the insulating element 3 is less than the outer diameter 80 of the body 2. Thus, the insulating element 3 only partially covers the top terminal face 5 of the body 2. Furthermore, the insulating element 3 is configured to be fully included within a volume delimited by the outer volume 80 of the body 2.

When the winding operation is performed, the conductor wires 19 are wound around an assembly formed by an arm of the insulating member 4, a tooth 9 of the body 2 and an arm 18 of the insulating element 3, that are vertically aligned. The winding of the conductor wires 19 thus forms, around each of these assemblies, a winding 20 whose top and bottom portions are qualified as winding overhangs. The electrical connection made between the different windings 20 can adopt different configurations.

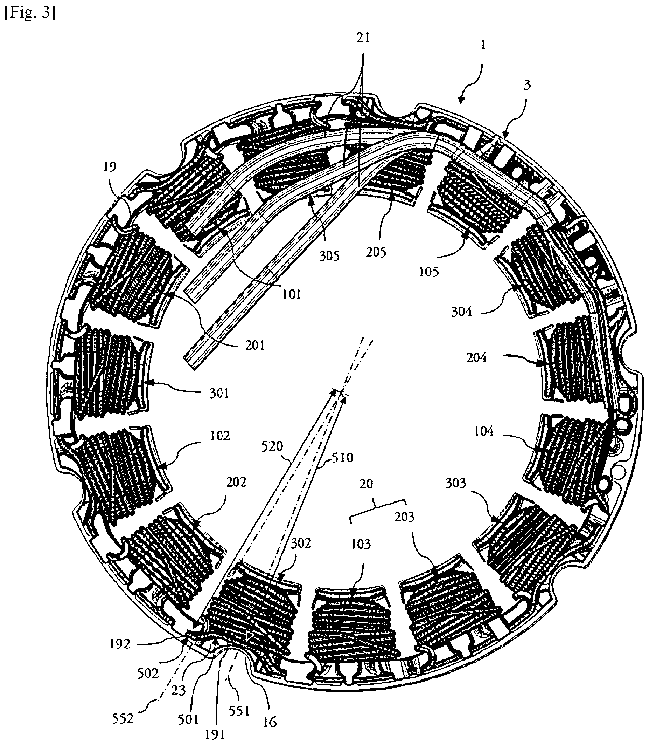

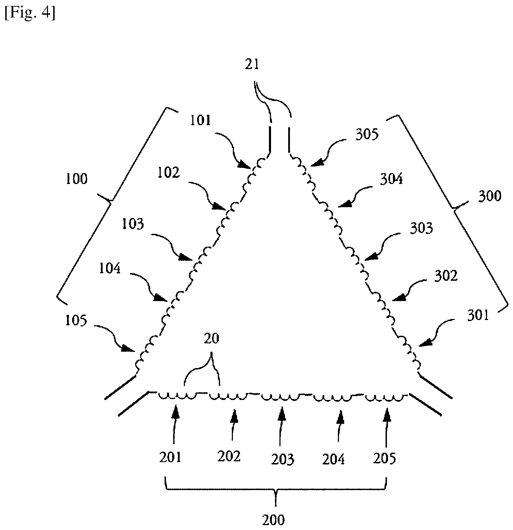

In the present invention, the winding of the windings 20 is done so as to adopt a delta configuration, explained in figures 3 and 4. In a delta configuration, the windings 20 are divided up into three distinct subsets, each of these subsets constituting a different phase. In the example illustrated, the stator 1 comprises fifteen windings 20. Each subset, in other words each phase, is composed of five windings 20 mounted in series and of two electrical terminals 21. For example, a first phase 100 comprises windings 101 to 105, a second phase 200 comprises windings 201 to 205 and a third phase 300 comprises windings 301 to 305.

Figure 3 details the respective arrangement of the different windings 20 whereas Figure 4 schematically illustrates the electrical connection thereof. The winding is done in such a way that two windings electrically disposed in series are not adjacent within the stator 1, or to put it another way, two adjacent windings do not belong to the same phase 100, 200 or 300. Thus, in moving along the inner radial wall 7 of the stator 1 in the anticlockwise direction, there are observed a first winding of the first phase 101, then a first winding of the second phase 201, which is succeeded by a first winding of the third phase 301, then a second winding of the first phase 102, a second winding of the second phase 202, and so on up to a fifth winding of the third phase 305, disposed so as to bracket the first winding of the first phase 101 with the first winding of the second phase 201.

It should be noted that the total number of windings, or the number of windings per phase 100, 200 or 300, can vary, the example represented being in no way limiting. In the example illustrated in Figure 3, the electrical terminals 21 are grouped together in a common zone of the stator and directed towards an electrical connector 22, visible in Figure 1, electrically connecting the stator 1 to an electrical power supply.

Because of the spaced-apart arrangement of the different windings 20 of one and the same phase 100, 200 or 300, it is necessary to arrange the stator 1 so as to ensure the organization of the different conductor wires 19 so that they circumvent the housing securing members, and the electrical insulation of the conductor wires 19 relative to these same housing securing members of the rotating electrical machine. The insulating element 3 has, to this end, different arrangements and members, explained in more detail hereinbelow, making it possible notably to control the radial position of the conductor wires 19 relative to the extension axis 500 of the insulating element 3.

By studying the arrangement of one of the conductor wires 19 relative to the insulating element and to the stator 1, it is observed that said conductor wire 19 is arranged according to at least two radial positions which are each determined by a radial distance relative to the extension axis 500 on which the insulating element is centred. A first portion 191 of the conductor wire 19 is arranged according to a first radial position 501 which is defined by a first radial distance 510. A second portion 192 of this same conductor wire 19 is arranged according to a second radial position 502 which is defined by a second radial distance 520.

In the example illustrated, the first radial distance 510 of the first radial position 501 measures the dimension separating the extension axis 500 from a point of one of the receptacles, not visible, receiving the first portion 191 of the conductor wire 19. The first radial distance 510 is in particular measured along a straight line 551 passing through the extension axis 500 and the low wall 23 delimiting said receptacle. The second radial distance 520 represents, for its part, the dimension measured between the extension axis 500 and the second radial position 502, along a second straight line 552 passing alongside the low wall 23.

Notably, the first radial distance 510 is less than the second radial distance 520. In other words, the conductor wire 19 is arranged in such a way that its first portion 191, disposed according to the first radial position 501, is radially closer to the extension axis 500 than its second portion 192, disposed according to the second radial position 502, and the conductor wire 19 exhibits an alternation between the first radial position 501 and the second radial position 502.

In particular, the first portion 191 of the conductor wire 19 is radially interposed between the low wall 23 and the extension axis 500 of the insulating element, the first portion 191 is thus turned towards the interior of the stator 1, the low wall 23 physically and electrically insulating the conductor wire 19 from the housing securing members surrounding the stator 1, which are not represented, and running in the indentations 16 of the insulating element and of the notches of the body of the stator 1. Conversely, the second portion 192 of the conductor wire 19, arranged according to the second radial position 502, is turned towards the outside of the stator 1.

Thus, when the rotating electrical machine is assembled, the physical and electrical insulation of the conductor wire 19 in the zone of passage of the securing members is ensured by displacing the conductor wire 19 from the second radial position 502, turned towards the outside of the stator 1, to the first radial position 501, turned towards the interior of the stator 1 such that the low wall 23 is radially interposed between the first portion 191 of the conductor wire 19 and the securing member.

In order to ensure such an arrangement of the conductor wires of the windings of the stator, and more particularly of the winding overhangs, the insulating element 3 comprises different members, detailed in Figures 5 to 7, such as the low walls 23 delimiting the receptacles 33, hooks 24 and helical grooves 25, the latter being formed on the arms 18.[

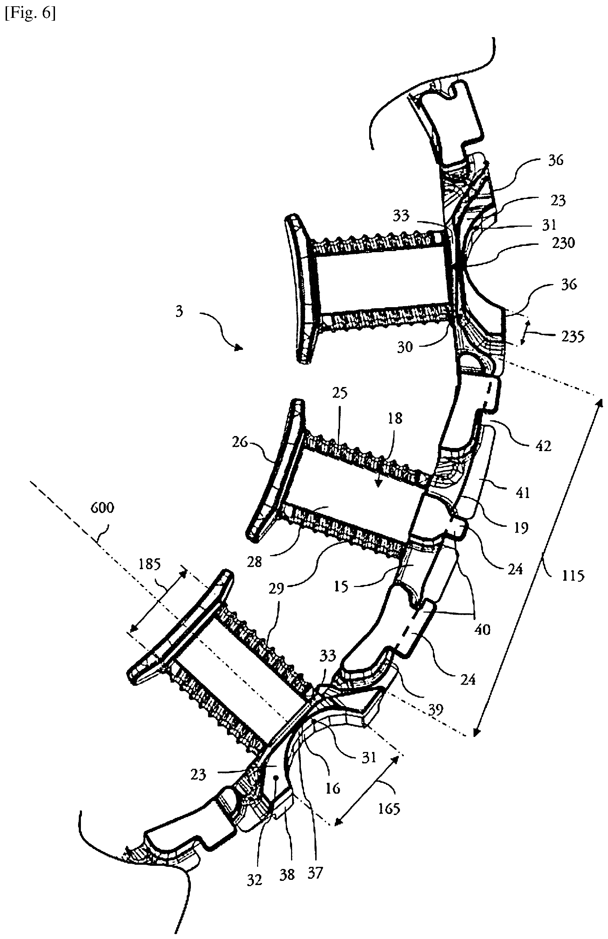

The helical grooves 25 can be observed in all of Figures 5 to 7, and more particularly in Figure 6, illustrating the arms 18 in more detail. As represented, the arms 18 have a substantially parallelepipedal form comprising, at a free end, a flaring forming a substantially flat border 26. All of the arms 18 have an identical configuration. Here, an arm 18 comprises a flat bottom side, intended to come into contact with a tooth of the body of the stator, and two lateral sides 27, extending from the inner radial face 12 of the support 11 to the border 26, and a top side 28, which is also flat. At each join zone attaching the top side 28 to each lateral side 27, the arm 18 has a rounded edge 29 which incorporates a plurality of helical grooves 25 intended to direct and hold the conductor wire or wires. In the examples represented, the helical grooves 25 are disposed regularly from the border 26 of the arm 18 to the inner radial face 12 of the support 11. It will nevertheless be possible to envisage adopting a different disposition or width of the helical grooves 25. Also, helical grooves 25 can be incorporated in the top side 28 of the arm 18.

The insulating element 3 also comprises a plurality of low walls 23. These low walls 23 here have an identical configuration. They emerge from the top face 15 and comprise an inner periphery 30 and an outer periphery 31. Notably, the walls 23 are arranged so as to be vertically aligned with the indentations 16 that are present, the outer periphery 31 of each low wall 23 being disposed in the continuity of the outer radial face of the support 11 and thus having a semi-circular profile. The indentation 16 then extends over a height equal to an aggregate height 160 of the support 11 and of the low wall 23, measured in a direction parallel to the extension axis 500 between the bottom face of the support and a top surface of the low wall 23. The low wall 23 then partially delimits the indentation 16, more specifically, the low wall 23 delimits the indentation 16 in a top part.

The inner periphery 30 of the low wall 23 is not, on the other hand, disposed in the continuity of the inner radial face 12 of the support 11, it emerges from the top face of said support 11, the low wall 23 thus not extending over all of the thickness of the support 125. That way, the top face 15 of the support 11 and the inner periphery 30 of the low wall 23 delimit a receptacle 33 configured to receive at least one conductor wire and thus make it possible to electrically insulate the connection between two windings of one and the same phase. The inner periphery 30 of the low wall 23 can have a rectilinear section, as illustrated, or even an arc form. The low wall 23 thus has a form comparable to an arc or to a "truncated U", following the form of the indentation 60 that it delimits.

As previously explained, the indentations 16 are disposed so that each indentation 16 is radially aligned with an arm 18, that is to say that at least one common radial axis 600 passes through the arm 18 and the indentation 16. This arrangement can be observed more in Figures 5 to 7.

The arm 18, the receptacle, the low wall 23 and the indentation 16 are aligned so as to be each passed through by one and the same radial axis 600. More specifically, it can be seen that the indentation 16 and the arm 18 are each defined by a width, respectively called width of the indentation 165 and width of the arm 185. These widths are measured in the plane of the top face 150, orthogonal to the extension axis 500. For the width of the arm 165, the distance separating the lateral sides 27 of the arm 18 are measured along an axis at right angles to at least one of the lateral sides 27. For the indentation 16, the distance separating two points of the lateral edges 17 contained in the plane of the top face 150 is measured. In the configuration illustrated, the width of the arm 185 is substantially less than the width of the indentation 165. Likewise, the radial axis 600 common to the indentation 16 and to the arm 18 can be defined as being the radial axis 600 passing through the middle of the width of the arm 185 and through the middle of the width of the indentation 165.

This radial axis 600 is contained in a radial plane 650, at right angles to the plane of the top face 150. The radial plane 650 divides the arm 18 into two fragments that are symmetrical to one another relative to said radial plane 650. The same applies for the indentation 16. The radial axis 600, and therefore the radial plane 650, also pass through the low wall 23, which is radially interposed between the receptacle 33 and the indentation 16. Contrary to what could be observed for the arm 18 and the indentation 16, the low wall 23 does not necessarily have a symmetrical structure relative to the radial plane 650, but rather comprises, as illustrated, two asymmetrical branches whose lateral ends 36 are of distinct forms. These branches can be configured in order to accompany the organization of one or more conductor wires, for example by orienting one branch angled, and more specifically towards an adjacent member, which is also involved in the organization of the conductor wires. Additionally, one branch can have a truncated lateral end 36, that is to say that it can comprise an additional surface, extending between the inner periphery 30 and the outer periphery 31, such a feature facilitating the insertion of a conductor wire at the receptacle 33.

The low wall 23 is also characterized by a variable thickness. In a central zone 37, situated between the arm 18 and the indentation 16 and passed through by the radial plane 650, the low wall 23 adopts a minimum thickness 230, this minimum thickness 230 being nevertheless configured to ensure the electrical insulation of any conductor wire situated in the receptacle 33. The minimum thickness 230 of the low wall 23 is measured along the radial axis 600, between the inner periphery 30 and the outer periphery 31.

At least one lateral end 36, the low wall 23 has a maximum thickness 235, measured between the inner periphery 30 and the outer periphery 31 along an axis extending, for example, at right angles to the inner periphery 30. Such an increase in the thickness contributes to the indentation of the low wall 23, thereby increasing its resistance to physical stresses. The thickness of the low wall 23 thus increases in advancing, along the branches of the low wall 23, from the central zone 37 to the lateral ends 36. This thickening can be accompanied by the presence of shoulders 38 included in the support 11 of the insulating element. The shoulders 38 consist of a thickening of the support 11 at the lateral edges 27 of the indentation 16, said shoulders 38 extending in the continuity of the lateral ends 36 of the low wall 23, in a direction substantially parallel to that of the extension axis 500.

In order to organize the different conductor wires of the stator, the insulating element 3 is also equipped with a plurality of hooks 24, these hooks 24 being able to be observed in Figures 5 to 7. These hooks 24 can thus have variable forms, but generally retain a structure composed of a base 39 and a finger 40. The base 39 of the hook 24 emerges from the top face 15 of the support 11 and extends in a direction substantially parallel to the extension axis 500 whereas the finger 40 emerges from a free end of the base 39 and extends towards the outside of the insulating element 3, in a direction substantially at right angles to that of said base 39.

The hooks 24 can be defined by a height, called height of the hook 240. The height of the hook 240 measures the space separating the top face 15 of the support 11 from a bottom face of the finger 40 of the hook 24, measured along an axis parallel to that of the extension axis 500. The height of the hook 240 thus determines a space configured to receive and organize one or more conductor wires. The hooks 24 illustrated in the different figures are characterized by a height of the hooks 240 allowing the arrangement of at least two or three conductor wires arranged one on top of the other in a direction parallel to that of the extension axis 500.

At the top face 15 of the support 11, the insulating element 3 comprises a flange 41 formed on the portions of the support 115 separating the indentations 16 from one another. This flange 41 extends in the continuity of the top face 15, in a direction parallel to the plane of the top face 150 and towards the outside of the insulating element 3. In the example illustrated, this flange 41 is discontinuous. The insulating element 3 thus exhibits an alternation between a section of the flange 41 and an interval 42, the interval 42 being, for example, disposed at the level of a hook 24. It is nevertheless possible to envisage arranging a flange 41 extending continually between two indentations 16.

The hooks 24 and the flange 41 define a space forming a recess 43 configured to allow the passage of a plurality of conductor wires but also to limit their translational movement in a direction parallel to the extension axis 500. Depending on the point of the recess 43 considered, the latter can be delimited by a hook 24 and/or the flange 41. The recess 43 is thus defined by the height of the hook 240. Additionally, to organize the different conductor wires, the insulating element 3 can include simple blocks 44, visible in Figures 5 to 7, consisting of a protuberance of material emerging from the top face 15 in a direction substantially parallel to that of the extension axis 500.

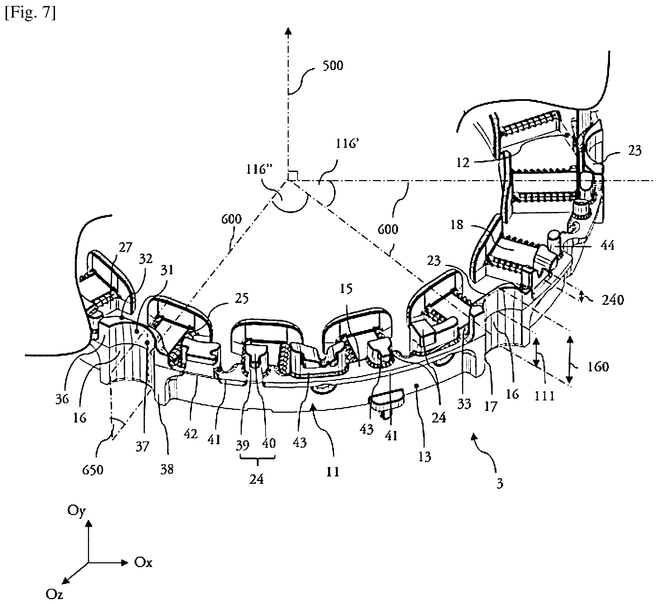

Figures 6 and 7 (detail) show the general relative arrangement of the indentations 16, of the low wall 23, of the hooks 24 and of the flange 41 within the insulating element 3. The different indentations 16 are separated from one another by the portion of the support 115 defined by an angular segment 116' or 116". The angular segment 116' or 116" is measured in the plane of the top face 150, between two rays emerging from one and the same point of the extension axis 500 and each passing through a middle of the width of an indentation 165. In the present invention, this angular segment 116 is configured to comprise at least one arm 18, said arm 18 not being radially disposed in the alignment of an indentation 16. Thus, the indentations 16 are then not aligned with two adjacent arms 18.

Notably, in the example of insulating element 3 illustrated, the indentations 16 are disposed regularly, each indentation 16 being respectively separated from the two indentations 16 bracketing it by a first portion of the support, defined by a first angular segment 116', and by a second portion of the support, defined by a second angular segment 116". The first portion of the support comprises an arm 18 whereas the second portion of the support comprises two arms 18.

The hooks 24 and the blocks 44 are distributed in the portions of the support 115 separating the indentations 16 and are arranged so that each portion of the support 115 comprises at least two hooks 24. Notably, the hooks 24 can be arranged in the radial alignment of an arm 18, so as to be passed through by at least one common radial axis, or, on the contrary, the hooks 24 can be disposed in a section of the support 11 without arms 18, that is to say in a section of the support 11 separating two adjacent arms 18.

Within the plurality of hooks 24 included in each portion of support 115, at least one of the hooks 24 is particularly arranged at a lateral end 36 of a low wall 23. That way, the hook 24 delimits, at least partially, the receptacle 33 intended to receive at least one conductor wire 19 and contributes to the arrangement of said conductor wire 19 in the insulating element.

The arrangement and the form of the hooks 24, of the blocks 44 but also of the low walls 23 thus condition the organization, but above all the arrangement, of the conductor wires 19 according to different radial positions, such as the first radial position or the second radial position, relative to the extension axis of the insulating element 3. The hooks 24, disposed in the portions of the support 115, not being configured to allow the passage of the conductor securing members, tend to favour the passage of the conductor wires 19 towards the outside of the insulating element 3, or in other words, towards the second radial position, through their form and their involvement in the formation of the recess 43, thus distancing the conductor wires 19 from the windings or even from the inner radial face 12 of the support 11 to bring them closer to the outer radial face 13. Conversely, the low walls 23 are configured to physically and electrically insulate the conductor wires 19 disposed in the receptacles 33 of the securing members running at the level of the indentations 16 of the insulating element 3. The low walls 23 thus allow the passage of the conductor wires 19 in a radially more inner zone of the insulating element 3, that is to say according to the first radial position, the conductor wires 19 thus being arranged so that they are radially closer to the extension axis 500 when they are disposed at the level of one of the low walls 23 than when they are arranged at the level of the hooks 24.

It can thus be noted that certain features relating to the form of the low walls 23 actively contribute to the transition described from the "outer" arrangement, in the recess 43, to the "inner" arrangement in the receptacle 33, and vice versa. Such is, for example, the case of the angled disposition of the branches of the low walls 23 or even of the asymmetrical form of said branches.

It will be understood on reading the above that the present invention proposes an insulating element for the winding overhang of a stator, for example intended for a motor vehicle compressor, configured to organize the conductor wires of the different windings and to electrically insulate them from securing members of a housing enclosing a rotating machine comprising said stator. The insulating element comprises, to this end, a combination of low walls and of hooks specifically arranged to allow the organization of the different conductor wires.

The invention should not however be limited to the means and configurations described and illustrated here, and it extends also to any equivalent means or configuration. In particular, the size and the form of the low walls or of the hooks, and the number of indentations, of low walls or of hooks, will be able to be modified without being detrimental to the invention, in so far as the insulating element, ultimately, fulfils the same functionalities as those described in this document.

## Claims

1. Insulating element (3) for winding overhangs of a stator (1) comprising a support (11) centred on an extension axis (500) and defined by an outer radial face (13), an inner radial face (12) and a top face (15), which extends in a plane substantially orthogonal to the extension axis (500), the insulating element (3) comprising a plurality of arms (18) emerging from the inner radial face (12) and distributed circumferentially thereon, the insulating element (3) comprising a plurality of indentations (16) distributed circumferentially in the outer radial face (13) and extending along the extension axis (500) of the support (11), wherein the indentations are configured to allow a passage for securing members, such as tie-rods, which run in or along the housing enclosing a rotating electrical machine comprising the stator, at least one indentation (16) being at least partially delimited by a low wall (23) emerging from the top face (15) of the support (11) in a direction substantially parallel to the extension axis (500), wherein the insulating element (3) comprises at least one receptacle (33) delimited by the low wall (23) and by the top face (15), the receptacle (33) being configured to receive at least one conductor wire (19) of a winding (20) of the stator (1), **characterized in that** the low wall (23) is radially interposed between the receptacle (33) and the indentation (16).

2. Insulating element (3) according to the preceding claim, wherein at least one radial direction, called radial axis (600), passes through an arm (18), a receptacle (33), a low wall (23) and an indentation (16).

3. Insulating element (3) according to any one of the preceding claims, wherein at least one low wall (23) comprises an outer periphery (31) disposed in the continuity of the outer radial face (13) of the support (11).

4. Insulating element (3) according to any one of the preceding claims, wherein at least one low wall (23) has a variable thickness, defined by a minimum thickness (230) and a maximum thickness (235), the low wall (23) having the minimum thickness (230) in a central zone (37) situated between the arm (18) and the indentation (16), and the low wall (23) having the maximum thickness (235) at at least one lateral end (36) of the low wall (23).

5. Insulating element (3) according to any one of the preceding claims,
wherein a portion of the support (115) separating two adjacent indentations (16) is defined by an angular segment (116' or 116"), this portion of support (115) comprising at least one arm (18).

6. Insulating element (3) according to the preceding claim, the insulating element (3) comprising a plurality of hooks (24) emerging from the top face (15) of the support (11), at least one of these hooks (24) delimiting the receptacle (33).

7. Insulating element (3) according to Claim 5 or 6, wherein the support (11) comprises, at the level of the top face (15), a flange (41) delimiting, with the hooks (24), a recess (44) for the passage of at least one conductor wire (19).

8. Insulating element (3) according to any one of the preceding claims, wherein at least one arm (18) comprises at least one helical groove (25) configured to receive at least one conductor wire (19) of the winding overhang.

9. Stator (1) of a rotating electrical machine comprising a body (2) of the stator (1) of cylindrical form, a plurality of windings (20) formed by at least one conductor wire (19) and an insulating element (3) according to any one of the preceding claims, the body (2) of the stator (1) comprising a top terminal face (5) against which the insulating element (3) is disposed.

10. Stator (1) according to the preceding claim, wherein the windings (20) are electrically connected according to a delta configuration.

11. Stator (1) according to Claim 9 or 10, wherein at least the conductor wire (19) is arranged relative to the insulating element (3) according to at least two radial positions which are each determined by a radial distance with respect to the extension axis (500) of the insulating element (3), a first portion (191) of the conductor wire (19) being arranged according to a first radial position (501) which is defined by a first radial distance (501) and a second portion (192) of the same conductor wire (19) being arranged according to a second radial position (502) which is defined by a second radial distance (520), the first radial distance (501) being less than the second radial distance (502) and the first radial distance (501) extending along a straight line passing through the low wall (23).

12. Stator (1) according to the preceding claim, wherein at least the conductor wire (19) is arranged in the insulating element (3) in such a way that the first portion (501) of the conductor wire (19) is radially interposed between the low wall (23) and the extension axis (500) of the insulating element (3).

13. Rotating electrical machine of a motor vehicle, the rotating electrical machine comprising a housing housing a stator (1) according to either one of Claims 9 and 10, the housing comprising a block and an electronic unit configured to close said block, the stator (1) being situated radially around a rotor that is mobile in rotation about the extension axis (500), at least one notch (10) of the stator (1) and one indentation (16) of the insulating element (3) of the stator (1) allowing at least the passage of a securing member ensuring that the electronic unit is secured on the block.

## Patentansprüche

1. Isolierelement (3) für Wickelköpfe eines Stators (1), umfassend einen Träger (11), der auf einer Erstreckungsachse (500) zentriert ist und durch eine äußere radiale Fläche (13), eine innere radiale Fläche (12) und eine obere Fläche (15) definiert ist, die sich in einer Ebene im Wesentlichen orthogonal zu der Erstreckungsachse (500) erstreckt, wobei das Isolierelement (3) eine Vielzahl von Armen (18) umfasst, die aus der inneren radialen Fläche (12) austreten und in Umfangsrichtung darauf verteilt sind, wobei das Isolierelement (3) eine Vielzahl von Vertiefungen (16) umfasst, die in Umfangsrichtung in der äußeren radialen Fläche (13) verteilt sind und sich entlang der Erstreckungsachse (500) des Trägers (11) erstrecken, wobei die Vertiefungen dazu ausgelegt sind, einen Durchgang für Befestigungselemente, wie etwa Zugstäbe, zu ermöglichen, die in oder entlang des Gehäuses verlaufen, das eine rotierende elektrische Maschine mit dem Stator umschließt, wobei mindestens eine Vertiefung (16) zumindest teilweise durch eine von der Oberseite (15) des Trägers (11) in einer Richtung im Wesentlichen parallel zur Erstreckungsachse (500) austretende niedrige Wand (23) begrenzt ist, wobei das Isolierelement (3) mindestens eine durch die niedrige Wand (23) und durch die obere Fläche (15) begrenzte Aufnahme (33) umfasst, wobei die Aufnahme (33) dazu ausgelegt ist, mindestens einen Leiterdraht (19) einer Wicklung (20) des Stators (1) aufzunehmen,
**dadurch gekennzeichnet, dass**
die niedrige Wand (23) radial zwischen der Aufnahme (33) und der Vertiefung (16) eingefügt ist.

2. Isolierelement (3) nach dem vorhergehenden Anspruch, wobei mindestens eine radiale Richtung, die als radiale Achse (600) bezeichnet wird, durch einen Arm (18), eine Aufnahme (33), eine niedrige Wand (23) und eine Vertiefung (16) verläuft.

3. Isolierelement (3) nach einem der vorhergehenden Ansprüche, wobei mindestens eine niedrige Wand (23) einen Außenumfang (31) umfasst, der in der Kontinuität der äußeren radialen Fläche (13) des Trägers (11) angeordnet ist.

4. Isolierelement (3) nach einem der vorhergehenden Ansprüche, wobei mindestens eine niedrige Wand (23) eine variable Dicke aufweist, die durch eine minimale Dicke (230) und eine maximale Dicke (235) definiert ist, wobei die niedrige Wand (23) die minimale Dicke (230) in einer zentralen Zone (37) aufweist, die zwischen dem Arm (18) und der Vertiefung (16) angeordnet ist, und die niedrige Wand (23) die maximale Dicke (235) an mindestens einem seitlichen Ende (36) der niedrigen Wand (23) aufweist.

5. Isolierelement (3) nach einem der vorhergehenden Ansprüche, wobei ein Abschnitt des Trägers (115), der zwei benachbarte Vertiefungen (16) trennt, durch ein Winkelsegment (116' oder 116") definiert ist, wobei dieser Abschnitt des Trägers (115) mindestens einen Arm (18) umfasst.

6. Isolierelement (3) nach dem vorhergehenden Anspruch, wobei das Isolierelement (3) eine Vielzahl von Haken (24) umfasst, die aus der oberen Fläche (15) des Trägers (11) austreten, wobei mindestens einer dieser Haken (24) die Aufnahme (33) begrenzt.

7. Isolierelement (3) nach Anspruch 5 oder 6, wobei der Träger (11) in Höhe der oberen Fläche (15) einen Flansch (41) umfasst, der mit den Haken (24) eine Ausnehmung (44) zum Durchtritt mindestens eines Leiterdrahtes (19) begrenzt.

8. Isolierelement (3) nach einem der vorhergehenden Ansprüche, wobei mindestens ein Arm (18) mindestens eine spiralförmige Nut (25) umfasst, die dazu ausgelegt ist, mindestens einen Leiterdraht (19) des Wickelkopfes aufzunehmen.

9. Stator (1) einer rotierenden elektrischen Maschine, umfassend einen Körper (2) des Stators (1) in zylindrischer Form, eine Vielzahl von Wicklungen (20), die durch mindestens einen Leiterdraht (19) gebildet sind, und ein Isolierelement (3) nach einem der vorhergehenden Ansprüche, wobei der Körper (2) des Stators (1) eine obere Anschlussfläche (5) umfasst, an der das Isolierelement (3) angeordnet ist.

10. Stator (1) nach dem vorhergehenden Anspruch, wobei die Wicklungen (20) elektrisch gemäß einer Delta-Konfiguration verbunden sind.

11. Stator (1) nach Anspruch 9 oder 10, wobei mindestens der Leiterdraht (19) relativ zu dem Isolierelement (3) gemäß mindestens zwei radialen Positionen angeordnet ist, die jeweils durch einen radialen Abstand bezüglich der Erstreckungsachse (500) des Isolierelements (3) bestimmt sind, wobei ein erster Abschnitt (191) des Leiterdrahts (19) gemäß einer ersten radialen Position (501) angeordnet ist, die durch einen ersten radialen Abstand (501) definiert ist, und ein zweiter Abschnitt (192) desselben Leiterdrahts (19) gemäß einer zweiten radialen Position (502) angeordnet ist, die durch einen zweiten radialen Abstand (520) definiert ist, wobei der erste radiale Abstand (501) kleiner als der zweite radiale Abstand (502) ist und sich der erste radiale Abstand (501) entlang einer Geraden erstreckt, die durch die niedrige Wand (23) verläuft.

12. Stator (1) nach dem vorhergehenden Anspruch, wobei zumindest der Leiterdraht (19) derart in dem Isolierelement (3) angeordnet ist, dass der erste Abschnitt (501) des Leiterdrahts (19) radial zwischen der niedrigen Wand (23) und der Erstreckungsachse (500) des Isolierelements (3) eingefügt ist.

13. Rotierende elektrische Maschine eines Kraftfahrzeugs, wobei die rotierende elektrische Maschine ein Gehäuse umfasst, das einen Stator (1) nach einem der Ansprüche 9 und 10 aufnimmt, wobei das Gehäuse einen Block und eine Elektronikeinheit umfasst, die dazu ausgelegt ist, den Block zu schließen, wobei der Stator (1) radial um einen Rotor herum angeordnet ist, der um die Erstreckungsachse (500) drehbar ist, wobei mindestens eine Kerbe (10) des Stators (1) und eine Vertiefung (16) des Isolierelements (3) des Stators (1) mindestens den Durchgang eines Befestigungselements ermöglicht, das sicherstellt, dass die Elektronikeinheit an dem Block befestigt ist.

## Revendications

1. Élément d'isolation (3) pour têtes de bobines d'un stator (1) comprenant un support (11) centré sur un axe d'extension (500) et défini par une face radiale externe (13), une face radiale interne (12) et une face supérieure (15), qui s'étend dans un plan substantiellement orthogonal à l'axe d'extension (500), l'élément d'isolation (3) comprenant une pluralité de bras (18) émergeant de la face radiale interne (12) et répartis de manière circonférentielle sur celle-ci, l'élément d'isolation (3) comprenant une pluralité d'indentations (16) réparties de manière circonférentielle dans la face radiale externe (13) et s'étendant le long de l'axe d'extension (500) du support (11), dans lequel les indentations sont configurées pour permettre un passage pour des organes de fixation, tels que des tirants, qui passent dans ou le long du logement renfermant une machine électrique tournante comprenant le stator, au moins une indentation (16) étant au moins partiellement délimitée par une paroi basse (23) émergeant de la face supérieure (15) du support (11) selon une direction substantiellement parallèle à l'axe d'extension (500), dans lequel l'élément d'isolation (3) comprend au moins un réceptacle (33) délimité par la paroi basse (23) et par la face supérieure (15), le réceptacle (33) étant configuré pour recevoir au moins un fil conducteur (19) d'une bobine (20) du stator (1),
**caractérisé en ce que**
la paroi basse (23) est interposée de manière radiale entre le réceptacle (33) et l'indentation (16).

2. Élément d'isolation (3) selon la revendication précédente, dans lequel au moins une direction radiale, appelée axe radial (600), traverse un bras (18), un réceptacle (33), une paroi basse (23) et une indentation (16).

3. Élément d'isolation (3) selon l'une quelconque des revendications précédentes, dans lequel au moins une paroi basse (23) comprend une périphérie externe (31) disposée dans la continuité de la face radiale externe (13) du support (11).

4. Élément d'isolation (3) selon l'une quelconque des revendications précédentes, dans lequel au moins une paroi basse (23) a une épaisseur variable, définie par une épaisseur minimale (230) et une épaisseur maximale (235), la paroi basse (23) ayant l'épaisseur minimale (230) dans une zone centrale (37) située entre le bras (18) et l'indentation (16), et la paroi basse (23) ayant l'épaisseur maximale (235) au niveau d'au moins une extrémité latérale (36) de la paroi basse (23).

5. Élément d'isolation (3) selon l'une quelconque des revendications précédentes, dans lequel une portion du support (115) séparant deux indentations (16) adjacentes est définie par un segment angulaire (116' ou 116"), cette portion de support (115) comprenant au moins un bras (18).

6. Élément d'isolation (3) selon la revendication précédente, l'élément d'isolation (3) comprenant une pluralité de crochets (24) émergeant de la face supérieure (15) du support (11), au moins un de ces crochets (24) délimitant le réceptacle (33).

7. Élément d'isolation (3) selon la revendication 5 ou la revendication 6, dans lequel le support (11) comprend, au niveau de la face supérieure (15), une bride (41) délimitant, avec les crochets (24), un évidement (44) pour le passage d'au moins un fil conducteur (19).

8. Élément d'isolation (3) selon l'une quelconque des revendications précédentes, dans lequel au moins un bras (18) comprend au moins une rainure hélicoïdale (25) configurée pour recevoir au moins un fil conducteur (19) de la tête de bobine.

9. Stator (1) d'une machine électrique tournante comprenant un corps (2) du stator (1) de forme cylindrique, une pluralité de bobines (20) formées par au moins un fil conducteur (19) et un élément d'isolation (3) selon l'une quelconque des revendications précédentes, le corps (2) du stator (1) comprenant une face terminale supérieure (5) contre laquelle l'élément d'isolation (3) est disposé.

10. Stator (1) selon la revendication précédente, dans lequel les bobines (20) sont électriquement connectées selon une configuration en delta.

11. Stator (1) selon la revendication 9 ou la revendication 10, dans lequel au moins le fil conducteur (19) est agencé relativement à l'élément d'isolation (3) selon au moins deux positions radiales qui sont chacune déterminées par une distance radiale par rapport à l'axe d'extension (500) de l'élément d'isolation (3), une première portion (191) du fil conducteur (19) étant agencée selon une première position radiale (501) qui est définie par une première distance radiale (501) et une deuxième portion (192) du même fil conducteur (19) étant agencée selon une deuxième position radiale (502) qui est définie par une deuxième distance radiale (520), la première distance radiale (501) étant inférieure à la deuxième distance radiale (502) et la première distance radiale (501) s'étendant le long d'une ligne droite traversant la paroi basse (23).

12. Stator (1) selon la revendication précédente, dans lequel au moins le fil conducteur (19) est agencé dans l'élément d'isolation (3) de telle sorte que la première portion (501) du fil conducteur (19) soit interposée de manière radiale entre la paroi basse (23) et l'axe d'extension (500) de l'élément d'isolation (3).

13. Machine électrique tournante d'un véhicule à moteur, la machine électrique tournante comprenant un logement logeant un stator (1) selon l'une quelconque des revendications 9 et 10, le logement comprenant un bloc et une unité électronique configurée pour fermer ledit bloc, le stator (1) étant situé de manière radiale radialement autour d'un rotor qui est mobile en rotation autour de l'axe d'extension (500), au moins une encoche (10) du stator (1) et une indentation (16) de l'élément d'isolation (3) du stator (1) permettant au moins le passage d'un organe de fixation assurant que l'unité électronique est fixée sur le bloc.
